# EUROPÄISCHE PATENTANMELDUNG

(11) **EP 1 518 739 A2**
(43) Veröffentlichungstag der Anmeldung: **30.03.2005**
(21) Anmeldenummer: 04022909.8
(22) Anmeldetag: 25.09.2004
(51) Int. Cl.: B60K 15/035

(54) **Kraftfahrzeugtank mit Entlüftungssystem**

(30) Priorität: 29.09.2003 DE 10345627
(71) Anmelder: Alfmeier Präzision AG Baugruppen und Systemlösungen, 91757 Treuchtlingen (DE)
(72) Erfinder: Martis, Josip, 74585 Rot am See (DE); Kürbis, Jan, 06343 Mansfeld (DE)
(74) Vertreter: Mörtel & Höfner

(57) **Zusammenfassung**

Ein Kraftstofftank enthält ein Entlüftungssystem, welches eine den Tankinnenraum mit der Außenumgebung verbindende Entlüftungsleitung aufweist, wobei diese einen Siphon bildet, und an der tiefsten Stelle der Entlüftungsleitung ein Verbindungsstück vorgesehen ist, das an der tiefsten Stelle des Siphons eine mit einer Unterdruckquelle verbundene Absaugöffnung aufweist.

## Beschreibung

Die Erfindung betrifft einen Kraftfahrzeugtank mit einem Entlüftungssystem.

Ein Kraftfahrzeugtank weist ein Entlüftungssystem auf, mit dessen Hilfe ein Druckausgleich zwischen dem Tankinnenraum und der Umgebung, also der Atmosphäre geschaffen wird. Der Druckausgleich erfolgt z.B., wenn Kraftstoff beim Betrieb des Kraftfahrzeugs aus dem Tank entnommen oder beim Betanken in diesen eingefüllt wird. Die hierzu nötige Be- bzw. Entlüftung des Kraftfahrzeugtanks, also das Ein- bzw. Ausströmen von Luft in bzw. aus dem Tankinnenraum, erfolgt über mehrere Tankeinbauten im Tankinnenraum, z.B. ein Roll-Over-Ventil, einen Kraftstoffabscheider oder ein Füllstandsbegrenzungsventil, und einen Aktivkohlefilter als Schnittstelle zur Umwelt, der meist außerhalb des Tanks angeordnet ist.

Die einzelnen Komponenten des Entlüftungssystems sind untereinander durch Entlüftungsleitungen, oft in Form flexibler Schläuche, verbunden. Diese Leitungen sind aufgrund komplizierter Tankgeometrien heutiger Kraftfahrzeugtanks oft mit nach unten gerichteten Leitungsbögen bzw. -knien verlegt. Während der Fahrt bzw. über die Nutzungsdauer des Fahrzeugs kann sich in diesen Leitungen Kraftstoff in flüssiger Form ansammeln. Dieser fließt dann zu den Stellen, an denen die Leitungen einen nach unten, also in Schwerkraftrichtung ausgewölbten Siphon bilden. Durch sich im Siphon ansammelnden Kraftstoff wird der für die durchströmende Luft nutzbare Leitungsquerschnitt reduziert und so das Durchströmen erschwert.

Z.B. beim Betankungsvorgang entsteht so ein höherer Staudruck für die aus dem Tankinnenraum entweichende Luft, was zu einer frühzeitigen Abschaltung der Zapfpistole und letztlich zu unvollständiger Befüllung des Kraftfahrzeugtanks führt.

Ein Abfließen des Kraftstoffs aus der Entlüftungsleitung aus einem derartigen Siphon ist, wenn überhaupt, nur in geeigneter Schräglage des Fahrzeugs bei geringem Druckniveau möglich.

Aufgabe der vorliegenden Erfindung ist es, flüssigen Kraftstoff aus einer oben beschriebenen Entlüftungsleitung auf einfache und kostengünstige Weise zu entfernen.

Die Aufgabe wird gelöst durch einen Kraftstofftank mit einem Entlüftungssystem, welches eine den Tankinnenraummit der Außenumgebung verbindende Entlüftungsleitung aufweist, wobei diese einen Siphon bildet, und an der tiefsten Stelle der Entlüftungsleitung ein Verbindungsstück vorgesehen ist, das an der tiefsten Stelle des Siphons eine mit einer Unterdruckquelle verbundene Absaugöffnung aufweist.

Obwohl sich flüssiger Kraftstoff in der Entlüftungsleitung zwar bei Fahrt des Fahrzeugs evtl. hin und her bewegt, sammelt er sich aufgrund der Schwerkraft z.B. bei einem Ampelstopp oder bei gleichmäßiger Geradeausfahrt an der tiefstgelegenen Stelle, nämlich im Siphon der betreffenden Entlüftungsleitung.

An eben dieser Stelle, also an der tiefsten Stelle des Siphons, ist die Entlüftungsleitung aufgetrennt. Dort ist ein Verbindungsstück, z.B. ein Leitungsverbinder, eingesetzt, welches den Innenquerschnitt der Entlüftungsleitung unverändert fortsetzt oder nur unwesentlich verringert und welches selbst an der tiefsten Stelle seines Innenraums eine Absaugöffnung aufweist. An der in die Unterseite der Entlüftungsleitung eingebrachten Absaugöffnung greift eine Unterdruckquelle saugend an. Der in der Entlüftungsleitung befindliche Kraftstoff wird so durch die Absaugöffnung nach unten mit Hilfe der Unterdruckquelle aus der Entlüftungsleitung abgesaugt. Anschließend kann er z.B. dem Kraftstoffvorrat im Tankinneren wieder zugeführt werden. Da sich nach und nach nahezu der gesamte, sich in der Entlüftungsleitung befindliche Kraftstoff zur Absaugöffnung bewegt, wird die Entlüftungsleitung nahezu vollständig von flüssigem Kraftstoff entleert. Der volle Innendurchmesser der Entlüftungsleitung steht der durchströmenden Luft zur Verfügung und der Strömungswiderstand ist nicht reduziert.

Ein aufwändiges Anbohren oder sonstiges Einbringen der Absaugöffnung in die Entlüftungsleitung wird durch Einbringen des Verbindungsstücks vermieden. Es können z.B. die bisher für Entlüftungsleitungen üblichen Schläuche weiter verwendet werden. Ein Verbindungsstück erleichtert den Anschluss der Teilleitungen z.B. durch daran angeformte Stutzen zum Aufstecken der betreffenden Leitungen. Die Abdichtung der Absaugöffnung bezüglich der Unterdruckquelle wird somit erleichtert.

Jede für die Ansammlung von Kraftstoff anfällige Entlüftungsleitung im Tank kann aufgetrennt, mit einem Verbindungsstück versehen und an eine Unterdruckquelle angeschlossen werden. So sind stets alle Leitungen des Entlüftungssystems frei von flüssigem Kraftstoff und der gesamte Leitungsquerschnitt steht überall im Entlüftungssystem für durchströmende Luft zur Verfügung.

Die sich im Entlüftungssystem sammelnden Kraftstoffmengen sind derart gering, nämlich ca. 20 bis 30 ml pro Stunde Fahrtzeit des Kraftfahrzeugs, dass als Unterdruckquelle bzw. Absaugvorrichtung besonders eine solche mit geringer Förderleistung ausreicht, um das Entlüftungssystem größtenteils frei von flüssigem Kraftstoff zu halten. Hierzu sind z.B. in Tanksystemen benutzte Saugstrahlpumpen geeignet. Diese können durch die ohnehin im Tank vorhandene elektrische Kraftstoffpumpe betrieben werden. Sie sind klein, leicht und kostengünstig als Standardbauteil zu beziehen.

In modernen Kraftfahrzeugtanks sind oft bereits mehrere Saugstrahlpumpen zu verschiedenen Zwecken vorhanden. Eine oder mehrere dieser Pumpen können benutzt werden, um die Aufgabe der Unterdruckquelle zu erfüllen, können also für die Absaugung der Entlüftungsleitung einfach mitbenutzt werden. Dies spart zusätzliche Bauteile, Aufwand und Kosten für eine separate zusätzliche Unterdruckquelle.

Auch sind oft außerhalb des Tanks angeordnete Vakuumpumpen oder sonstige Unterdruckquellen bereits im Fahrzeug vorhanden, z.B. eine das gesamte Tanksystem auf Unterdruck haltende oder für Zentralverriegelung vorgesehene Vakuumpumpe oder der im Saugrohr des Motors erzeugte Unterdruck. Derartige Unterdruckquellen können ebenfalls in einfacher und kostengünstiger Weise im wesentlichen durch Anbringung eines zur Absaugöffnung führenden Schlauches genutzt werden. Der abgesaugte Kraftstoff wird dann wieder in den Vorrat des Kraftstofftanks zurückgeführt.

Die Unterdruckquelle kann direkt an der Entlüftungsleitung bzw. am Verbindungsstück angebracht, z.B. angeklebt oder angeformt sein. Die Absaugöffnung ist dann direkt an die Unterdruckquelle angekoppelt. Eine direkte Ankopplung führt zu einem integralen Bauteil, das z.B. aus der gesamten Entlüftungsleitung bzw. dem Verbindungsstück mit angebrachter Unterdruckquelle besteht. Das betreffende Bauteil kann dann vorkonfektioniert werden, sich so die Endmontage des Kraftfahrzeugtanks vereinfachen und somit die Gesamtkosten reduziert werden. Lediglich die entsprechenden Anschlussleitungen, z.B. für die integrierte Saugstrahlpumpe bei der Montage des Tanks müssen dann noch angeschlossen werden.

Besonders wenn eine bereits im Tank an anderer Stelle vorhandene Unterdruckquelle verwendet werden soll, kann diese über eine Verbindungsleitung an der Absaugöffnung angeschlossen sein.

Das Verbindungsstück kann im Querschnitt erweitert sein und so eine eventuell gegenüber dem Siphon weiter vertiefte Kraftstoffsammelkammer bilden, in deren Boden dann wiederum die Absaugöffnung eingebracht ist. Aus der Kraftstoffsammelkammer entweicht der einmal darin eingetretene Kraftstoff auch in Kurvenfahrten etc. nicht mehr so leicht und kann schneller abgesaugt werden.

Das Einbauvolumen bleibt bei der erfindungsgemäßen Lösung in allen Ausführungsformen sehr gering. Somit steht der Tankinnenraum für einzufüllenden Kraftstoffvorrat nahezu vollständig zur Verfügung.

Innerhalb der Entlüftungsleitung kann, z.B. im Verbindungsstück selbst, ein Schwimmer vorgesehen sein, welcher die Unterdruckquelle abhängig vom sich im Siphon befindlichen Kraftstoffniveau steuert, bzw. diese bei Nichtbedarf abschaltet und so die Druckverhältnisse im Entlüftungssystem nicht beeinflusst sind.

Um einen Übertritt von Kraftstoff vom Tankinneren durch die Unterdruckquelle in die Entlüftungsleitung zu verhindern, kann ein Rückschlagventil an geeigneter Stelle, z.B. in der Unterdruckquelle oder zwischen dieser und der Absaugöffnung, vorgesehen sein.

Weist das Rückschlagventil einen zur Unterdruckquelle hinweisenden, die Absaugöffnung umgebenden Dichtsitz und einen durch ein Federelement gegen den Dichtsitz vorgespannten und durch Betreiben der Unterdruckquelle abhebbaren Dichtkörper auf, so ist auf einfache Weise sichergestellt, daß kein Kraftstoff vom Tankinnenraum in die Entlüftungsleitung gelangt, so lange die Unterdruckquelle außer Betrieb ist, also z.B. bei einem Fahrzeugüberschlag. Im geschlossenen Zustand des Rückschlagventils sind außerdem die Druckverhältnisse im Tank und im Entlüftungssystem so, als wäre keine Absaugöffnung im Entlüftungssystem vorhanden.

Alternativ hierzu kann auch ein die Absaugöffnung in Richtung zur Unterdruckquelle hin verschließendes Schwimmerventil vorgesehen sein, welches durch sich im Siphon ansammelnden Kraftstoff geöffnet wird. Die Absaugöffnung ist also nur ab einer bestimmten im Siphon vorhandenen Kraftstoffmenge geöffnet. So bleiben die Druckverhältnisse wie oben genannt unverändert, so lange keine Notwendigkeit zur Kraftstoffabsaugung gegeben ist. Eine zusätzliche Roll-Over-Funktionalität kann in einfacher Weise durch Anbringen einer unter der Absaugöffnung gelagerten Roll-Over-Kugel in bekannter Weise realisiert werden.

Für die weitere Beschreibung der Erfindung wird auf die Ausführungsbeispiele der Zeichnungen.verwiesen. Es zeigen jeweils in schematischer Darstellung:
- Fig. 1: einen Ausschnitt aus einem Kraftfahrzeugtank mit Entlüftungssystem, mit einer einen Siphon bildenden und ein Verbindungsstück mit Absaugöffnung aufweisenden Entlüftungsleitung in schematischer Darstellung,
- Fig. 2: den Siphon aus Fig.1 mit aufgetrennter Entlüftungsleitung und dem die Absaugöffnung aufweisenden Leitungsverbinder in detaillierterer Darstellung,
- Fig. 3: einen alternativ gestalteten Kraftfahrzeugtank mit teilweise außen am Tank angeordneten Entlüftungssystem und Kraftstoffabsaugung,
- Fig. 4: den Leitungsverbinder aus Fig. 2 und 3 mit integrierter Saugstrahlpumpe als Absaugvorrichtung mit Elastomerventil in einer Schnittdarstellung.
- Fig. 5: einen Ausschnitt aus der Absaugvorrichtung von Fig. 4 mit federunterstütztem Rückschlagventil,
- Fig. 6: einen Ausschnitt aus der Absaugvorrichtung von Fig. 4 mit Klappenventil,
- Fig. 7: einen Ausschnitt aus der Absaugvorrichtung von Fig. 4 mit Schwimmerventil und Roll-Over-Ventil.

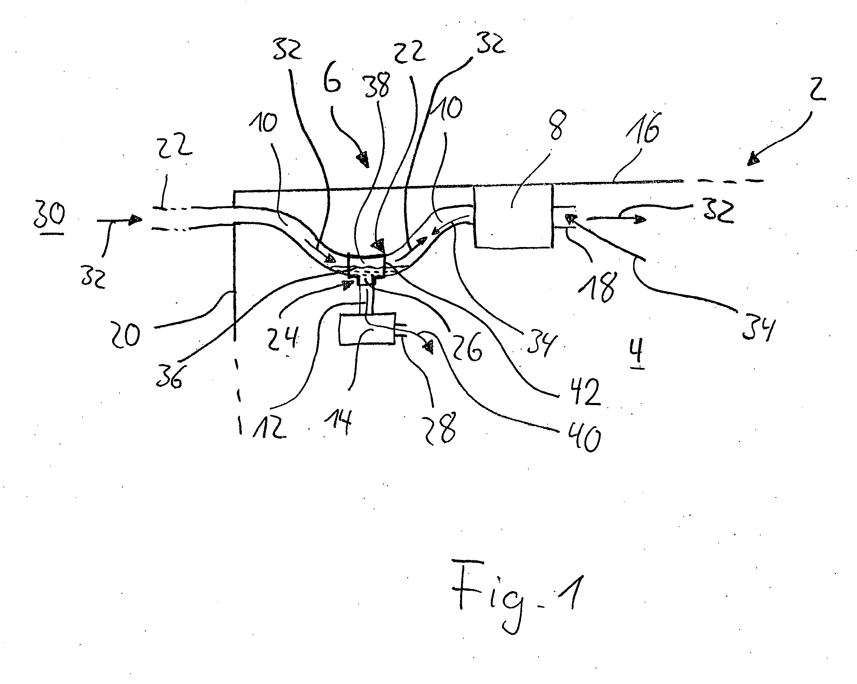

Fig. 1 zeigt einen Ausschnitt aus einem Kraftfahrzeugtank 2, in dessen Tankinnenraum 4 ein Entlüftungssystem 6 integriert ist. Die Darstellung ist stark vereinfacht.

Das Entlüftungssystem 6 umfasst ein Füllstandsbegrenzungsventil 8, eine Entlüftungsleitung 10, eine Verbindungsleitung 12, und eine Unterdruckquelle 14.

Das Füllstandsbegrenzungsventil 8 besitzt zwei Öffnungen und ist fest an der oberen Tankwand 16 angebracht. Durch die Öffnung 18 ist das Füllstandsbegrenzungsventil 8 zum Tankinneren 4 hin offen. An der anderen Öffnung des Füllstandsbegrenzungsventils 8 ist die Entlüftungsleitung 10 mit ihrem einen Ende angeschlossen. Die Entlüftungsleitung 10 ist durch eine Seitenwand 20 des Fahrzeugstanks 2 dichtend hindurch geführt und an ihrem anderen Ende 21 offen, um mit der Atmosphäre oder Umgebung 30 in Verbindung zu stehen. Dort ist ein nicht dargestellter Aktivkohlefilter angebracht.

Zwischen dem Füllstandsbegrenzungsventil 8 und dem Durchtritt durch die Seitenwand 20 bildet die Entlüftungsleitung 10 einen Siphon 22, mit anderen Worten ein Knie bzw. einen Leitungsbogen. Der Siphon 22 verläuft so, dass er nach unten, also in Richtung der Schwerkraft, vorgewölbt ist. An der tiefsten Stelle 24 ist ein Leitungsverbinder 42 eingesetzt, der eine Absaugöffnung 26 an der Unterseite aufweist. An dieser Absaugöffnung 26 ist die Verbindungsleitung 12 dichtend angeschlossen, z.B. angeschweißt. Die Verbindungsleitung 12 führt von der Absaugöffnung 26 zur Saugseite der Unterdruckquelle 14, also zu deren ansaugendem Eingang. Der Ausgang 28 bzw. die Druckseite der Unterdruckquelle 14 ist wiederum zum Tankinneren 4 hin offen.

Im Fahrbetrieb des nicht dargestellten Kraftfahrzeugs wird aus dem Tankinnenraum 4 des Fahrzeugtanks 2 nicht dargestellter Kraftstoff entnommen und dem nicht dargestellten Motor zugeführt. Durch den so entstehenden Unterdruck im Luftraum des Tankinnenraums 4 strömt durch das Entlüftungssystem 6 Frischluft von der Umgebung 30 in Richtung des Pfeils 32 in den Tankinnenraum 4, um im Tankinnenraum 4 wieder in etwa Atmosphärendruck herzustellen.

Bei z.B. voll gefülltem Kraftstofftank 4 und Fahrt durch Kurven oder über Straßenunebenheiten kann in Richtung des Pfeils 34 eine geringe Kraftstoffmenge durch die Öffnung 18 und das Füllstandsbegrenzungsventil 8 in die Entlüftungsleitung 10 gelangen.

Aufgrund der Schwerkraft sammelt sich der Kraftstoff 36 an der tiefsten Stelle 24 des Siphons 22, wie durch die gestrichelte Linie angedeutet. Durch den Kraftstoff 36 verringert sich der zur Be- oder Entlüftung des Tanks zur Verfügung stehende Querschnitt 38 in der Entlüftungsleitung 10. Um die Reduzierung des Querschnitts 38 minimal zu halten, bzw. wieder abzubauen, wird der Kraftstoff 36 über die Verbindungsleitung 12 und die Unterdruckquelle 14 in Richtung des Pfeils 40 aus dem Siphon 22 abgesaugt und über den Ausgang 28 wiederum dem Kraftstoffvorrat im Tankinnenraum 4 zugeführt. Somit verbleibt in jedem Betriebszustand des Kraftfahrzeugs nur ein minimaler oder gar kein Rest Kraftstoff 36 im Siphon 22. Der maximal verbleibende Kraftstoffrest 36 ist in Fig. 1 zur Verdeutlichung als übermäßig viel Kraftstoff 36 dargestellt. Der gesamte Querschnitt 38 der.Entlüftungsleitung 10 steht somit in jeder Betriebssituation zur Be- und Entlüftung des Fahrzeugtanks 2 zur Verfügung.

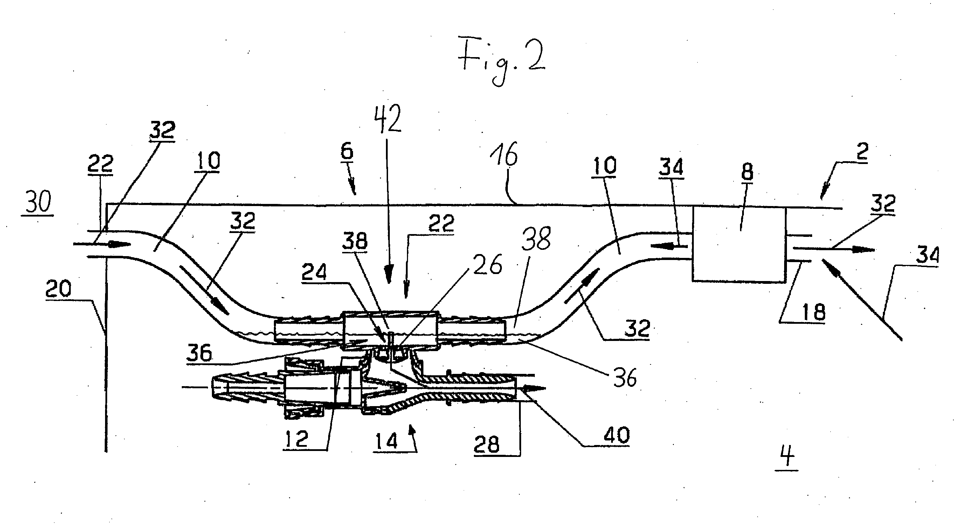

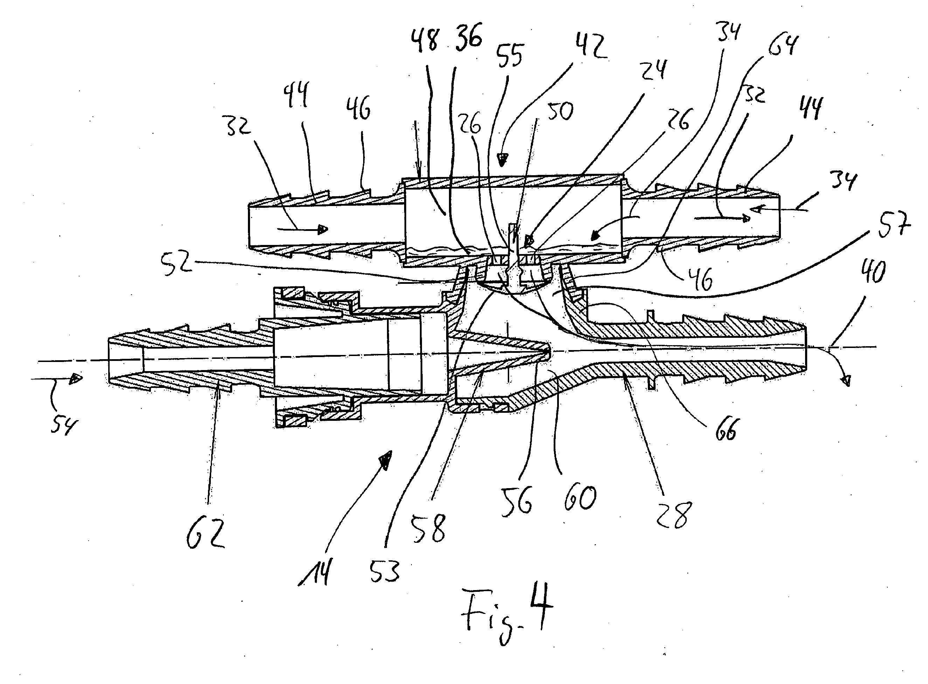

Fig. 2 zeigt den Siphon 22 aus Fig. 1 bzw. den Leitungsverbinder 42 in detaillierterer Darstellung. An der tiefsten Stelle 24 ist der selbst keine Absaugöffnung aufweisende Schlauchteil der Entlüftungsleitung 10 durchtrennt und der Leitungsverbinder 42 eingesetzt, der sozusagen die Entlüftungsleitung 10 fortsetzt bzw. ergänzt. Die durch die Auftrennung entstehenden Enden des Schlauchteils der Entlüftungsleitung 10 sind am Leitungsverbinder 42 dichtend angeschlossen. Die tiefste Stelle 24 des Siphons 22 wird somit vom Leitungsverbinder 42 gebildet, weshalb auch die Absaugöffnung 26 in diesem integriert ist und dort die Verbindungsleitung 12 und die Unterdruckquelle 14 angeschlossen ist. Als Unterdruckquelle findet in Fig. 2 eine in Fig. 4 detailliert erläuterte Saugstrahlpumpe Verwendung. Diese ist direkt an den Leitungsverbinder 42 angebracht, so dass die Verbindungsleitung 12 zu einem kurzen zylindrischen Kragen 64 entartet.

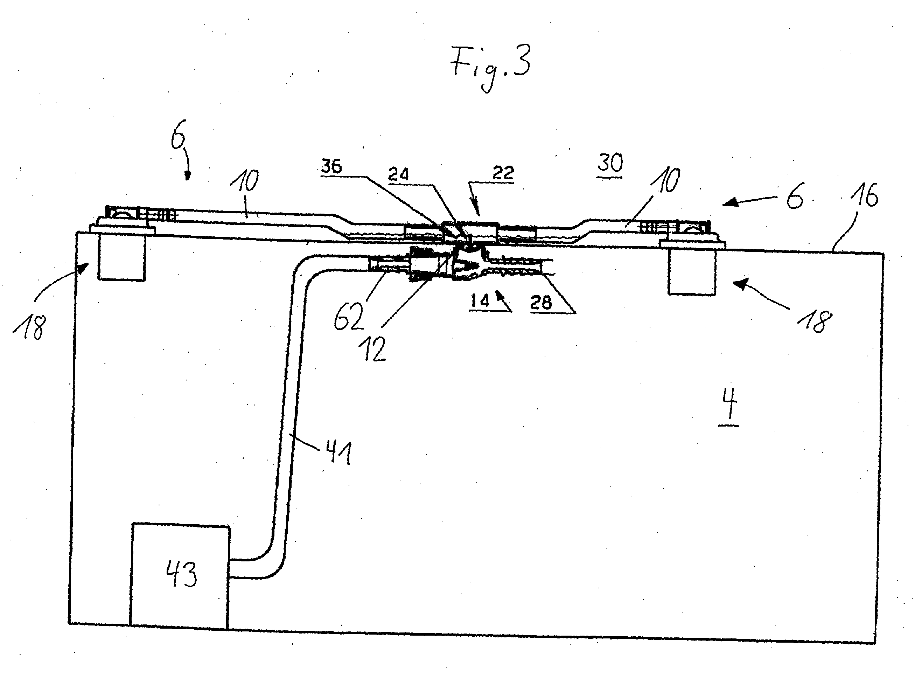

Fig. 3 zeigt eine alternative Ausführungsform für einen Fahrzeugtank 2 mit einem außen am Tank, also in der Umgebung 30 angeordneten Entlüftungssystem 6. Der Leitungsverbinder 42 ist hierbei ebenfalls außen am Tank angeordnet, wobei die Verbindungsleitung 12 die obere Tankwand 16 dichtend durchstößt, weshalb die Saugstrahlpumpe 14 weiterhin im Tankinnenraum 4 liegt. Im Inneren des Tanks ist keine zusätzliche Halterung für Leitungsverbinder 42 bzw. Saugstrahlpumpe 14 notwendig. Beide Bauteile sind an der Tankwand 16 befestigt. In Fig. 3 sind an beiden Enden der Entlüftungsleitung 10 nicht näher erläuterte Ventile-mit zum Tankinnenraum 4 hin weisenden Öffnungen 18 vorhanden, durch die Kraftstoff in die Entlüftungsleitung 10 gelangen kann. Das zur Umgebung 30 hin offene Ende 21 der Entlüftungsleitung 10 ist in Fig. 3 nicht sichtbar. Dargestellt ist jedoch die durch eine Verbindungsleitung 41 am Speisestutzen 62 der Saugstrahlpumpe 14 angeschlossene Kraftstoffpumpe 43.

Fig. 4 zeigt den Leitungsverbinder 42 aus Fig. 2 und 3, an den als Unterdruckquelle 14 direkt die Saugstrahlpumpe fest angebracht ist, und der mit dieser zusammen ein integrales Bauteil bildet.

Bei der Saugstrahlpumpe handelt es sich um eine herkömmliche Saugstrahlpumpe mit herkömmlicher Düse 56 und bekannter Wirkungsweise, die im Betrieb in Richtung des Pfeils 54 mit Kraftstoff unter Druck beschickt wird, z.B. aus einer nicht dargestellten, im Kraftstofftank angeordneten elektrischen Kraftstoffpumpe. Durch das Ausströmen von Kraftstoff an der Spitze 56 der Düse 58 in die Kammer 60 entsteht in der Kammer 60 ein Unterdruck. Durch den Ausgang 28 tritt der in die Saugstrahlpumpe eingedrückte Kraftstoff wieder aus dieser aus. Der Speisestutzen 62 und der Ausgang 28 der Saugstrahlpumpe sind an ihrem Außenumfang mit Wiederhaken ausgerüstet, um Anschlussmöglichkeit für nicht dargestellte Zu- und Abführungsschläuche zu bieten.

Auf eine nähere Beschreibung der Saugstrahlpumpe soll hier nicht eingegangen werden, da diese nur exemplarisch dargestellt ist.

Die Stutzen 44 am Leitungsverbinder 42 sind zum dauerhaften Halten der gemäß Fig. 2 aufgesteckten Entlüftungsleitung 10 mit Widerhaken 46 an deren Außenumfang ausgeführt. Im zwischen den beiden Stutzen 44 liegenden Mittelteil des Leitungsverbinders 42 ist eine Kammer 48 gebildet, die in etwa gleichen Innenquerschnitt wie die Entlüftungsleitung 10 aufweist. In der Kammer 48 sammelt sich in der in Fig. 1 beschriebenen Weise ein Rest Kraftstoff 36 an der tiefsten Stelle 24. In der Mitte der Unterseite der Kammer 48 sind mehrere, ringförmig angeordnete Absaugöffnungen 26 vorhanden, durch die der Kraftstoff 36 absaugbar ist.

Die Absaugöffnungen 26 sind durch ein außenseitig am Leitungsverbinder 42 angeordnetes Elastomerventil 50, z.B. ein Pilzventil, Membranventil, etc., verschließbar. Das Elastomerventil 50, hier in Form eines Pilzventils, ist gebildet durch einen unterseitig am Leitungsverbinder 42 angeformten, als Ventilsitz dienenden Kragen 52 und eine pilzförmige, nach unten gewölbte Membran 53, deren Außenrand mit dem Kragen 52 dichtend zusammenwirkt. Die Membran 53 liegt in der in Fig. 3 gezeigten Position am Kragen 52 an und verschließt so die Absaugöffnungen 26. In Richtung des Pfeils 40 ist die Membran, an ihrem Führungsstift 55 gehalten, axial vom Dichtsitz wegbewegbar, um die Absaugöffnungen 26 freizugeben.

Konzentrisch zum Kragen 53 ist ein weiterer Kragen 64 größeren Durchmessers am Leitungsverbinder 42 angeformt. Dieser dient zur mechanischen Befestigung der Saugstrahlpumpe am Leitungsverbinder 42. Hierzu ist an der Saugstrahlpumpe ein zum Kragen 53 passendes Gegenstück 66 angeformt, das mit diesem verbunden, z.B. verklebt oder angeschweißt ist. Der Kragen 53 bzw. der entsprechende Fortsatz an der Saugstrahlpumpe umfassen eine mit der Kammer 60 verbundene Verbindungskammer 57, die somit der Verbindungsleitung 12 aus Fig. 1 und 2 entspricht und die Saugstrahlpumpe mit den Absaugöffnungen 26 in Verbindung bringt.

Das Elastomerventil 50 dient dazu, dass keinesfalls Kraftstoff entgegen der Pfeilrichtung 40 durch die Saugstrahlpumpe in die Kammer 48 des Leitungsverbinders 42 eindringen und über die Entlüftungsleitung 10 in die Umgebung 30 gelangen kann. Bei Überdruck in der Verbindungskammer 57 gegenüber der Kammer 48 schließt nämlich das Elastomerventil 50. Es öffnet sich nur, indem es sich in Richtung des Pfeils 40 nach unten von seinem Ventilsitz 52 wegbewegt, verursacht durch den von der Saugstrahlpumpe erzeugten Unterdruck in der Kammer 57 gegenüber der Kammer 48, der dann am Elastomerventil 50 vorbei auf die Absaugöffnungen 26 wirkt. In Richtung des Pfeils 40 erlaubt das Elastomerventil 50 also die Absaugung von Kraftstoff 36 aus der Kammer 48.

Über den Stutzen 28 tritt in Richtung 40 der aus der Kammer 48 abgesaugte Kraftstoff 36 aus.

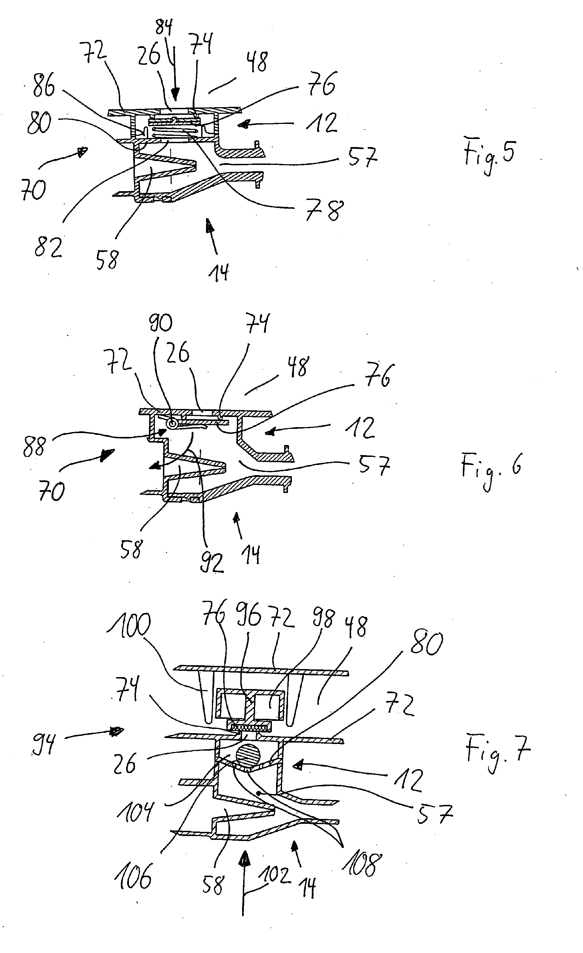

Fig. 5 zeigt den das Elastomerventil 50 enthaltenden Ausschnitt der Anordnung aus Fig. 4 mit einem alternativ ausgestalteten Rückschlagventil 70. Das Rückschlagventil 70 ist in der Verbindungsleitung 12 angeordnet. Es umfasst einen an der Wand 72 der Kammer 48 angeformten, die Absaugöffnung 26 umgebenden Dichtsitz 74, an dem ein Dichtelement 76 anliegt. Das Dichtelement 76 ist gegen den Dichtsitz 74 durch eine Schraubenfeder 78 vorgespannt, welche sich mit ihrem einen Ende am Dichtelement 76 und mit ihrem anderen Ende an der Wand 80 der Unterdruckquelle 14 abstützt. Um eine Verbindung zum Durchtritt von abgesaugtem Kraftstoff zwischen der Verbindungskammer 57 und der Kammer 48 zu schaffen, ist die Wand 80 mit einer Öffnung 82 versehen. In Fig. 5 ist die Anordnung im Zustand gezeigt, in dem die Unterdruckquelle 14 nicht in Betrieb ist. Das Dichtelement 76 verschließt somit die Absaugöffnung 26 und Kraftstoff kann nicht aus der Kammer 57 in die Kammer 48 gelangen. Gleichzeitig kann auch keine Luft durch die Absaugöffnung 26 strömen, so dass die Druckverhältnisse im Fahrzeugtank 2 und im Entlüftungssystem 6 unverändert gegenüber einem herkömmlichen Entlüftungssystem ohne Absaugöffnung 26 sind.

Wird die Unterdruckquelle 14 in Betrieb gesetzt, entsteht in der Kammer 57 ein Unterdruck bezüglich der Kammer 48, wodurch das Dichtelement 76 gegen die Kraft der Schraubenfeder 78 in Richtung des Pfeils 84 vom Dichtsitz 74 abgehoben wird und somit Kraftstoff aus der Kammer 48 in die Verbindungskammer 57 abgesaugt werden kann. Zur Führung des Dichtelements 76 im vom Dichtsitz 74 abgehobenen Zustand ist in der Verbindungsleitung 12 eine in Bewegungsrichtung 84 zum Dichtelement 76 konzentrische Führung 86 vorgesehen.

Fig. 6 zeigt eine alternative Ausführungsform eines Rückschlagventils 70. Hier wird das Dichtelement 76 durch eine Torsionsschraubenfeder 88 gegen den Dichtsitz 74 vorgespannt. Hierzu stützt sich die auf einer Drehachse 90 gelagerte Schraubenfeder 88 mit ihren beiden Enden an der Wand 72 und am Dichtelement 76 ab. Die Drehachse 90 ist gleichzeitig die Drehachse für das Dichtelement 76, welches sich somit nach Art einer Klappe oder Türe betätigen lässt. Entsprechend Fig. 5 ist in Fig. 6 der Zustand gezeigt, in dem die Unterdruckquelle 14 außer Betrieb gesetzt ist. Bei Einschalten der Unterdruckquelle 14 schwenkt das Dichtelement 76 in Richtung des Pfeils 92 um die Drehachse 90 weg und gibt die Absaugöffnung 26 frei.

Fig. 7 zeigt eine Ausführungsform der Anordnung aus Fig. 4, bei der das Elastomerventil 50 durch ein Schwimmerventil 94 ersetzt ist. Der Dichtsitz 74 ist hierbei an der, der Kammer 48 zugewandten Seite der Wand 72 angeordnet. Der Schwimmerkörper 96 mit seiner Luftkammer 98 und dem daran befestigten Dichtelement 76 ist in der Kammer 48 durch eine Führung 100 in Richtung des Pfeils 102 geführt. In dem in Fig. 7 dargestellten Zustand ist die Absaugöffnung 26 verschlossen, da kein Kraftstoff in der Kammer 48 angesammelt ist und der Schwimmerkörper 96 keinen Auftrieb erfährt. Zusätzliche wird bei eingeschalteter Unterdruckquelle 14 der Schwimmer durch die Druckdifferenz zwischen den Kammern 57 und 48 auf dem Dichtsitz 74 gehalten. Steigt in der Kammer 48 das Kraftstoffniveau an, erhält der Schwimmerkörper 96 über die Luftkammer 98 Auftrieb und wird gegen die Schwerkraft und die eben genannte Ansaugkraft in Richtung des Pfeils 102 bewegt, wodurch das Dichtelement 76 den Dichtsitz 74 verlässt und die Absaugöffnung 26 freigibt. Der Innendurchmesser der Kammer 8 ist so bemessen, dass der für das Entlüftungssystem 6 durchströmende Luft zur Verfügung stehende Querschnitt auch bei Vorhandensein des voluminösen Schwimmerkörpers 96 groß genug ist, um im Entlüftungssystem 6 keinen zusätzlichen Strömungswiderstand zu erzeugen.

Im Gegensatz zu den anderen in den Figuren gezeigten Ausführungsbeispielen ist in Fig. 7 die Absaugöffnung 26 auch bei Betrieb der Saugstrahlpumpe 14 solange verschlossen, solange kein oder nur eine geringe Menge Kraftstoff in der Kraftstoffsammelkammer 48 anwesend ist. Die Druckverhältnisse im gesamten Entlüftungssystem 6 sind deshalb unverändert gegenüber einer Ausführung ohne Absaugöffnung 26. Die Absaugung von Kraftstoff aus den Entlüftungssystem 6 erfolgt erst bei Vorhandensein einer nennenswerten Menge Kraftstoff in der Kammer 48.

Im Ausführungsbeispiel nach Fig. 7 ist zusätzlich in der Verbindungsleitung 12 eine Kammer 104 vorgesehen, welche eine Roll-over-Kugel 106 beinhaltet. Diese hat im Normalbetrieb des Fahrzeugtanks 2 keinerlei Funktionalität, da aufgrund der Öffnungen 108 in der Wand 80 die Absaugung von Kraftstoff aus der Kammer 48 zur Kammer 57 nicht behindert ist. Erst im Fall einer Kopflage des Fahrzeugtanks 2 verschließt die Roll-over-Kugel 106 die Öffnung 26 von der Seite der Kammer 104 her und verhindert so, dass Kraftstoff aus der Kammer 57 in die Kammer 48 und somit aus dem Fahrzeugtank 2 fließen kann.

### Bezugszeichenliste

- 2: Fahrzeugtank
- 4: Tankinnenraum
- 6: Entlüftungssystem
- 8: Füllstandsbegrenzungsventil
- 10: Entlüftungsleitung
- 12: Verbindungsleitung
- 14: Unterdruckquelle
- 16: obere Tankwand
- 18: Öffnung
- 20: Seitenwand
- 21: Ende
- 22: Siphon
- 24: tiefste Stelle
- 26: Absaugöffnung
- 28: Ausgang
- 30: Umgebung
- 32,34: Pfeil
- 36: Kraftstoff
- 38: Querschnitt
- 40: Pfeil
- 41: Verbindungsleitung
- 42: Leitungsverbinder
- 43: Kraftstoffpumpe
- 44: Stutzen
- 46: Widerhaken
- 48: Kammer
- 50: Elastomerventil
- 52: Kragen
- 53: Membran
- 54: Pfeil

- 55: Führungsstift
- 56: Spitze
- 57: Verbindungskammer
- 58: Düse
- 60: Kammer
- 62: Speisestutzen
- 64: Kragen
- 70: Rückschlagventil
- 72: Wand
- 74: Dichtsitz
- 76: Dichtelement
- 78: Schraubenfeder
- 80: Wand
- 82: Öffnung
- 84: Pfeil
- 86: Führung
- 88: Schraubenfeder
- 90: Drehachse
- 92: Pfeil
- 94: Schwimmerventil
- 96: Schwimmerkörper
- 98: Luftkammer
- 100: Führung
- 102: Pfeil
- 104: Kammer
- 106: Roll-Over-Kugel
- 108: Öffnung

## Patentansprüche

1. Kraftstofftank (2) mit einem Entlüftungssystem (6), welches eine den Tankinnenraum (4) mit der Außenumgebung (30) verbindende Entlüftungsleitung (10) aufweist, wobei diese einen Siphon (22) bildet, und an der tiefsten Stelle (24) der Entlüftungsleitung (10) ein Verbindungsstück (42) vorgesehen ist, das an der tiefsten Stelle (24) des Siphons (22) eine mit einer Unterdruckquelle (14) verbundene Absaugöffnung (26) aufweist.

2. Kraftstofftank (2) nach Anspruch 1, bei dem die Unterdruckquelle (14) eine Saugstrahlpumpe ist.

3. Kraftstofftank (2) nach Anspruch 2, bei dem die Saugstrahlpumpe eine bereits im Tank (2) vorhandene Saugstrahlpumpe ist.

4. Kraftstofftank (2) nach Anspruch 1, bei dem die Unterdruckquelle (14) eine außerhalb des Tanks (2) angeordnete, bereits vorhandene Unterdruckquelle ist.

5. Kraftstofftank (2) nach einem der Ansprüche 1 bis 4, bei dem die Unterdruckquelle (14) direkt an der Entlüftungsleitung (10) angebracht ist.

6. Kraftstofftank (2) nach einem der Ansprüche 1 bis 4, bei dem die Unterdruckquelle (2) an der Absaugöffnung (26) über eine Verbindungsleitung (12) angeschlossen ist.

7. Kraftstofftank (2) nach einem der vorhergehenden Ansprüche, mit einer in der Entlüftungsleitung (10) im Bereich der Absaugöffnung (26) angeordneten Kraftstoffsammelkammer (48).

8. Kraftstofftank (2) nach einem der vorhergehenden Ansprüche, mit einem im Siphon (22) angeordneten, die Unterdruckquelle (14) ansteuernden Schwimmer.

9. Kraftstofftank (2) nach einem der vorhergehenden Ansprüche, mit einem in Richtung von der Unterdruckquelle (14) zur Absaugöffnung (26) hin sperrenden Rückschlagventil.

10. Kraftstofftank (2) nach Anspruch 10, bei dem das Rückschlagventil einen zur Unterdruckquelle (14) hinweisenden, die Absaugöffnung (26) umgebenden Dichtsitz (74) und einen durch ein Federelement (78,88) gegen den Dichtsitz (74) vorgespannten und durch Betreiben der Unterdruckquelle (14) abhebbaren Dichtkörper (76) umfasst.
